# FASCICULE DE BREVET EUROPEEN

(11) **EP 2 929 774 B1**
(45) Date de publication et mention de la délivrance du brevet: **12.07.2017**
(21) Numéro de dépôt: 15162526.6
(22) Date de dépôt: 07.04.2015
(51) Int. Cl.: A01D 78/10

(54) **MACHINE POUR LA RÉCOLTE DE FOURRAGE PRÉSENTANT UN DÉFLECTEUR PERFECTIONNÉ**
HEUWERBUNGSMASCHINE MIT PERFEKTIONIERTEM ABLENKER
HAYMAKING MACHINE EQUIPPED WITH AN IMPROVED DEFLECTOR

(30) Priorité: 08.04.2014 FR 1453092
(43) Date de publication de la demande: 14.10.2015
(73) Titulaire: KUHN S.A., 67700 Saverne (FR)
(72) Inventeur: Gantzer, Christian, 57915 Woustviller (FR); Diebold, Bertrand, 67190 Gresswiller (FR)
(74) Mandataire: Esch, Esther Evelyne

(56) Documents cités:
- EP-A1- 0 526 365
- EP-A1- 0 845 199
- EP-A1- 1 076 482
- DE-U1- 9 400 521
- US-B1- 6 272 826

## Description

La présente invention se rapporte à une machine agricole pour la récolte de fourrage, notamment une machine de fenaison pour l'andainage de fourrage, comportant un bâti portant au moins une unité de travail pouvant occuper une position de travail dans laquelle l'unité de travail peut ramasser des végétaux couchés sur le sol et les déplacer latéralement, un déflecteur latéral étant relié au bâti au moyen d'un dispositif de liaison permettant au déflecteur d'occuper une position opérationnelle par rapport à l'unité de travail, dans laquelle le déflecteur coopère avec l'unité de travail de manière à recevoir un flux de végétaux déplacés latéralement par l'unité de travail pour former un andain.

Une machine de ce type est connue de la demande EP 2756749 déposée par le demandeur. Sur cette machine, la position opérationnelle du déflecteur est celle dans laquelle ce dernier se situe à côté de l'unité de travail correspondante et peut alors, pendant le travail de la machine, recevoir un flux de végétaux déplacés latéralement par ladite unité de travail. L'unité de travail étant considérée sensiblement à l'horizontale, le déflecteur dans sa position opérationnelle se situe à une faible hauteur au-dessus du sol. Un andain de largeur régulière est alors formé entre le déflecteur et l'unité de travail correspondante. Lorsque la machine est déplacée pour les travaux dans les champs, le déflecteur dans sa position opérationnelle peut heurter un obstacle rigide présent au sol, par exemple une pierre. Il peut aussi arriver que le déflecteur entre en collision avec un andain déjà formé si, par inadvertance, le conducteur de la machine omet de relever l'unité de travail. De tels risques existent quand la machine est déplacée dans sa direction d'avancement normale pour le travail. Ils existent aussi lorsque la machine est manoeuvrée en marche arrière en bout ou en bordure de parcelle, ces risques pouvant dans ce cas être accrus par les erreurs d'appréciation du gabarit de la machine ou par le manque de visibilité dont dispose le conducteur sur le déflecteur. Une collision du déflecteur avec un obstacle peut gravement endommager ce dernier ainsi que son dispositif de liaison au bâti de la machine. Un déflecteur endommagé n'assure plus correctement sa fonction. Sa remise en état est une perte de temps et entraîne des frais non négligeables pour l'utilisateur de la machine.

Une autre machine de ce type, connue par le document EP 0845199, comporte également un déflecteur déplaçable dans une direction longitudinale à la direction de déplacement de la machine.

La présente invention a pour but de proposer une machine agricole pour la récolte de fourrage, notamment une machine de fenaison pour l'andainage de fourrage, qui ne présente pas les inconvénients précités.

A cet effet, une importante caractéristique de l'invention consiste en ce que le dispositif de liaison est configuré pour que, pendant que la machine se déplace dans une direction et que l'unité de travail est en position de travail, le déflecteur soit autorisé à effectuer au moins un déplacement par rapport à l'unité de travail à partir de la position opérationnelle, longitudinalement dans une direction opposée à ladite direction de déplacement de la machine, lorsqu'une résultante d'un effort exercé sur le déflecteur excède un seuil déterminé. Ainsi, lorsque le déflecteur entre en collision avec un obstacle tel une pierre ou un andain relativement dense, il est autorisé à se déplacer longitudinalement par rapport à l'unité de travail correspondante et ce, dans une direction opposée à la direction de déplacement de la machine. Ce déplacement longitudinal du déflecteur en sens contraire de la direction de déplacement de la machine a pour effet de dissiper une partie de l'énergie du choc entre le déflecteur et l'obstacle. Les contraintes mécaniques sur le déflecteur et son dispositif de liaison sont ainsi réduites. Le risque que l'un ou l'autre de ces éléments soit endommagé au point d'en entraver le fonctionnement correct, est fortement diminué. Selon l'invention, le seuil d'effort, au-delà duquel le déflecteur est autorisé à se déplacer depuis sa position opérationnelle, peut être supérieur à la résultante des efforts normalement induits sur le déflecteur pendant le travail de récolte des végétaux. La résultante des efforts exercés par les végétaux déplacés latéralement par l'unité de travail et venant heurter le déflecteur, et des efforts exercés par le frottement du déflecteur avec le sol et/ou avec des végétaux présents au sol sur une faible hauteur, est alors insuffisante pour que le déflecteur se déplace depuis sa position opérationnelle initiale. Ledit seuil d'effort est en revanche inférieur à la résultante des efforts exercés sur le déflecteur heurtant un obstacle rigide ou un andain dense et/ou de grande hauteur, de telle sorte que le déflecteur puisse alors bouger depuis sa position opérationnelle initiale. Par rapport à l'état de la technique connu, le dispositif de liaison selon l'invention autorise ainsi une meilleure protection du déflecteur et de son dispositif de liaison en cas de choc, tout en garantissant que le déflecteur soit normalement maintenu dans sa position opérationnelle pendant le travail.

Selon une caractéristique importante de l'invention, le dispositif de liaison est configuré pour que, pendant que la machine se déplace dans une première direction dirigée vers l'avant et que l'unité de travail est en position de travail, le déflecteur soit autorisé à effectuer un premier déplacement par rapport à l'unité de travail à partir de sa position opérationnelle, longitudinalement dans une direction opposée à ladite première direction de déplacement de la machine, lorsqu'une résultante d'un effort exercé sur le déflecteur et dirigé vers l'arrière excède un premier seuil déterminé. Grâce à cette caractéristique, le dispositif de liaison selon l'invention autorise une protection accrue du déflecteur en cas de choc avec un obstacle situé à l'avant du déflecteur et consécutif au déplacement de la machine vers l'avant, tout en garantissant que le déflecteur soit normalement maintenu dans sa position opérationnelle pendant le travail.

Selon une caractéristique particulièrement avantageuse de l'invention, le dispositif de liaison est configuré pour que, pendant que la machine se déplace dans une deuxième direction dirigée vers l'arrière et que l'unité de travail est en position de travail, le déflecteur soit autorisé à effectuer un deuxième déplacement par rapport à l'unité de travail à partir de sa position opérationnelle, longitudinalement dans une direction opposée à ladite deuxième direction de déplacement de la machine, lorsqu'une résultante d'un effort exercé sur le déflecteur et dirigé vers l'avant excède un deuxième seuil déterminé. Grâce à cette caractéristique, le dispositif de liaison selon l'invention autorise une protection accrue du déflecteur en cas de choc avec un obstacle situé à l'arrière du déflecteur et consécutif au déplacement de la machine vers l'arrière, tout en garantissant que le déflecteur soit normalement maintenu dans sa position opérationnelle pendant le travail. La caractéristique susvisée offre notamment une meilleure protection du déflecteur lors des manoeuvres de la machine au champ, une partie d'entre elles pouvant être effectuée en marche arrière.

Selon une caractéristique avantageuse de l'invention, le dispositif de liaison est configuré pour que le au moins un déplacement longitudinal du déflecteur à partir de sa position opérationnelle comporte une composante de translation vers le haut. Ainsi, le déflecteur est relevé du sol en même temps qu'il est déplacé longitudinalement. Le déflecteur peut ainsi passer au-dessus d'un obstacle qu'il rencontre. Les contraintes mécaniques et dommages exercés sur le déflecteur et le dispositif de liaison sont ainsi considérablement réduits.

D'autres caractéristiques et avantages de l'invention ressortiront de la description ci-après avec référence aux dessins annexés qui représentent un exemple non limitatif de réalisation de la machine selon l'invention.

Sur ces dessins :
- la figure 1 représente une vue en perspective du dessus et depuis l'arrière d'un exemple de réalisation d'une machine selon l'invention, en position de travail, attelée à un tracteur ;
- la figure 2 représente une vue en perspective depuis l'avant de l'exemple de réalisation, en position de transport ;
- la figure 3 représente une vue latérale partielle de l'exemple de réalisation, le déflecteur étant dans sa position opérationnelle par rapport à l'unité de travail ;
- la figure 4 représente une vue latérale partielle de l'exemple de réalisation, le déflecteur étant placé en arrière de sa position opérationnelle ;
- la figure 5 représente une vue latérale partielle de l'exemple de réalisation, le déflecteur étant placé en avant de sa position opérationnelle.

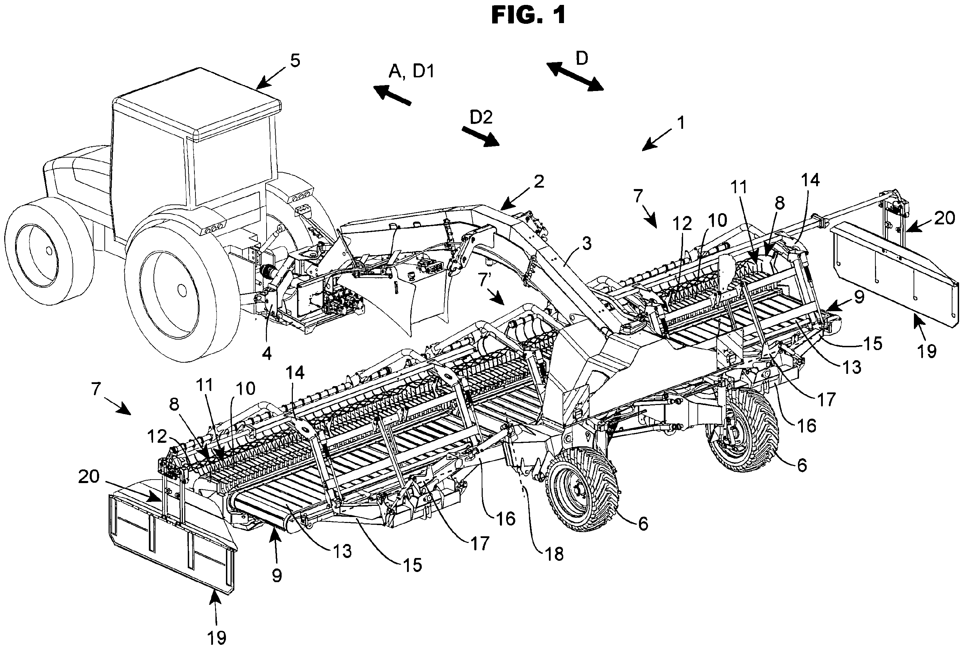

La machine (1) selon l'invention est une machine agricole pour la récolte de fourrage, notamment une machine de fenaison pour l'andainage de fourrage. Une telle machine (1) est notamment une andaineuse de végétaux couchés sur le sol. La machine (1) comporte un bâti (2). Selon l'exemple de réalisation illustré à la figure 1, ce bâti (2) comporte une poutre longitudinale (3) plus ou moins centrale. Le bâti (2) comporte en outre un dispositif d'accouplement (4), celui-ci est placé à l'extrémité frontale de ladite poutre longitudinale (3). Le dispositif d'accouplement (4) permet de relier le bâti (2) à un véhicule moteur, par exemple un tracteur (5), afin de déplacer la machine dans une direction d'avancement (A). Dans la description qui suit, les termes « gauche », « droite », « avant », « arrière » et « postérieure » se rapportent à la direction d'avancement (A), et les termes « supérieure », « haut », « dessus » et « dessous » sont définis par rapport au sol (S). Une prise de force du véhicule moteur assure l'animation des différents organes de travail de la machine (1). Le bâti (2) est supporté au sol (S) par un train de roues (6).

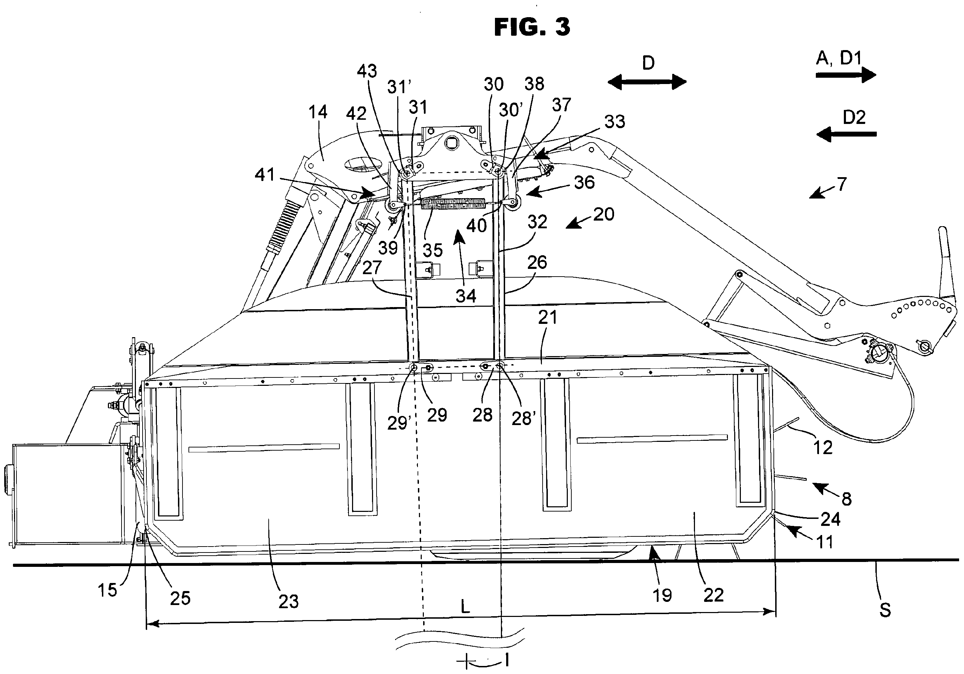

Le bâti (2) de la machine (1) porte au moins une unité de travail (7). Selon l'exemple de réalisation illustré à la figure 1, l'unité de travail (7) est une unité de ramassage et de déplacement de végétaux. Cette unité de ramassage et de déplacement est par exemple située, relativement à la direction d'avancement (A), entre le dispositif d'accouplement (4) et le train de roues (6). L'unité de travail (7) peut occuper une position de travail dans laquelle elle peut ramasser des végétaux couchés sur le sol (S) et dans laquelle elle peut les déplacer latéralement. Selon l'exemple de réalisation, l'unité de ramassage et de déplacement comporte un organe de ramassage (8) et un organe de déplacement (9). L'organe de ramassage (8) est du type pouvant être animé pendant le travail. Il comporte une surface de guidage (10) courbée et un rotor (11). Le rotor (11) peut être animé autour d'un axe de rotation dans le sens antihoraire, vu depuis la droite de l'unité de ramassage et de déplacement représentée plus en détail aux figures 3 à 5. Dans la position de travail de l'unité de travail (7), cet axe de rotation est transversal à la direction d'avancement (A), notamment sensiblement horizontal et sensiblement perpendiculaire à la direction d'avancement (A). L'organe de ramassage (8) comporte des dents (12) qui ramassent les végétaux au niveau du sol (S), les soulèvent et les projettent vers l'arrière. Les dents (12) comportent des pointes de dents qui décrivent une enveloppe courbe lorsque le rotor (11) est animé autour de l'axe de rotation. Les dents (12) émergent au moins partiellement de la surface de guidage (10). Dans l'exemple de réalisation des figures, l'organe de ramassage (8) est du type pick-up, dont les dents (12) sont portées par le rotor (11) et émergent de la surface de guidage (10) formée par une multitude de lames courbées autour du rotor (11) et placées les unes à côté des autres suivant l'axe de rotation. Les dents (12) se déplacent entre ces lames. Dans l'exemple de réalisation, la surface de guidage (10) est fixe. Les dents (12) sont commandées de telle sorte que l'enveloppe courbe décrite par le déplacement des pointes de dents n'est pas cylindrique. En effet, les dents (12) s'escamotent à l'intérieur de la surface de guidage (10) lorsqu'elles approchent d'une extrémité supérieure et postérieure de la surface de guidage (10). De cette manière, les dents (12) libèrent progressivement les végétaux qui approchent de l'organe de déplacement (9). Un tel déplacement des dents (12) est obtenu au moyen par exemple d'un chemin de came fixe à l'intérieur duquel se déplacent des galets portés par des cames reliées aux dents (12). Alternativement, des dents (12) non commandées sont aussi envisageables. Dans ce cas, l'enveloppe courbe décrite par les pointes de dents est un cylindre centré sur l'axe de rotation du rotor (11). D'autres formes de réalisation de l'organe de ramassage (8), non représentées, restent possibles. Selon une forme de réalisation, l'organe de ramassage (8) peut ainsi comporter une bande souple enroulée autour d'un premier rotor placé à l'avant de l'organe de ramassage (8) et autour d'un deuxième rotor placé plus en arrière. Ce deuxième rotor peut notamment être placé, dans la position de travail de l'unité de travail, à une distance du sol (S) plus élevée que le premier rotor, de manière à ce que l'organe de ramassage (8) puisse déplacer les végétaux qu'il ramasse vers l'arrière et vers le haut en direction de l'organe de déplacement (9). Une telle bande comporte des dents, des fourches ou des crochets qui peuvent être fixés ou articulés à la bande. Dans cette forme de réalisation, la surface de guidage (10) est constituée par la surface de la bande en contact avec les végétaux. La surface de guidage (10) est dans ce cas animée. L'axe de rotation du rotor (11) est celui du premier rotor.

L'organe de déplacement (9) des végétaux est du type pouvant être animé pendant le travail. Il se situe à l'arrière et à proximité de l'organe de ramassage (8) de sorte qu'il reçoive les végétaux projetés vers l'arrière par celui-ci. Cet organe de déplacement (9) comporte un convoyeur (13) qui déplace les végétaux transversalement à la direction d'avancement (A). Dans l'exemple de réalisation des figures, le convoyeur (13) est un convoyeur à bande. Cette bande est enroulée autour de deux cylindres placés aux extrémités latérales du convoyeur (13), entre lesquels cylindres s'étend une surface transporteuse de la bande en contact avec les végétaux. Ces cylindres peuvent tourner autour d'axes orientés, dans la position de travail de l'unité de travail (7), par exemple sensiblement dans la direction d'avancement (A). Au moins l'un de ces cylindres peut être entraîné durant le travail de sorte que les végétaux reçus de l'organe de ramassage (8) soient redéposés au sol (S) sous la forme d'un andain en vue de leur reprise ultérieure. L'organe de déplacement (9) peut aussi être un convoyeur à rouleaux, ces derniers étant montés sur des axes de rotation orientés, dans la position de travail de l'unité de travail (7), par exemple sensiblement dans la direction d'avancement (A). De tels rouleaux sont de préférence placés les uns à côté des autres et à faible distance les uns des autres, et peuvent être animés de telle sorte que les végétaux soient déplacés transversalement à la direction d'avancement (A). L'organe de déplacement (9) permet de transférer les végétaux vers le côté gauche ou le côté droit de l'unité de travail (7), par exemple pour former un andain d'un côté ou de l'autre.

Selon un exemple de réalisation non représenté de l'invention, l'unité de travail (7) est une unité de ramassage et de déplacement de végétaux couchés sur le sol (S), du type comportant un organe de ramassage formé par un rotor pouvant être animé autour d'un axe support par exemple sensiblement vertical dans la position de travail de l'unité de travail. Selon cet exemple de réalisation, l'unité de travail (7) comporte un carter dans lequel est fixé l'axe support. Sous le carter est disposé le rotor qui comporte des bras s'étendant vers l'extérieur. Ces bras sont équipés d'outils de travail tels que des fourches. Les bras sont guidés dans des paliers solidaires du rotor de sorte qu'ils puissent pivoter autour de leurs axes géométriques respectifs orientés suivant la longueur des bras. A l'intérieur du rotor est prévue une came de commande immobile qui est fixée sur l'axe support. Chaque bras comporte à son extrémité qui est située dans le rotor un levier avec un galet qui est guidé dans la came. Les bras sont ainsi commandés de sorte que leurs outils de travail ramassent les végétaux notamment sur la partie avant de leur trajectoire et les déplacent latéralement jusqu'à les déposer sous la forme d'un andain dans la partie latérale de leur trajectoire.

Tel que représenté à la figure 1, le bâti (2) de la machine (1) comporte une structure (14) qui s'étend au-dessus de l'unité de travail (7). Selon l'exemple de réalisation, cette structure (14) s'étend vers l'avant depuis un support (15) du bâti (2), lequel support (15) porte l'unité de travail (7) et est situé à l'arrière de celle-ci.

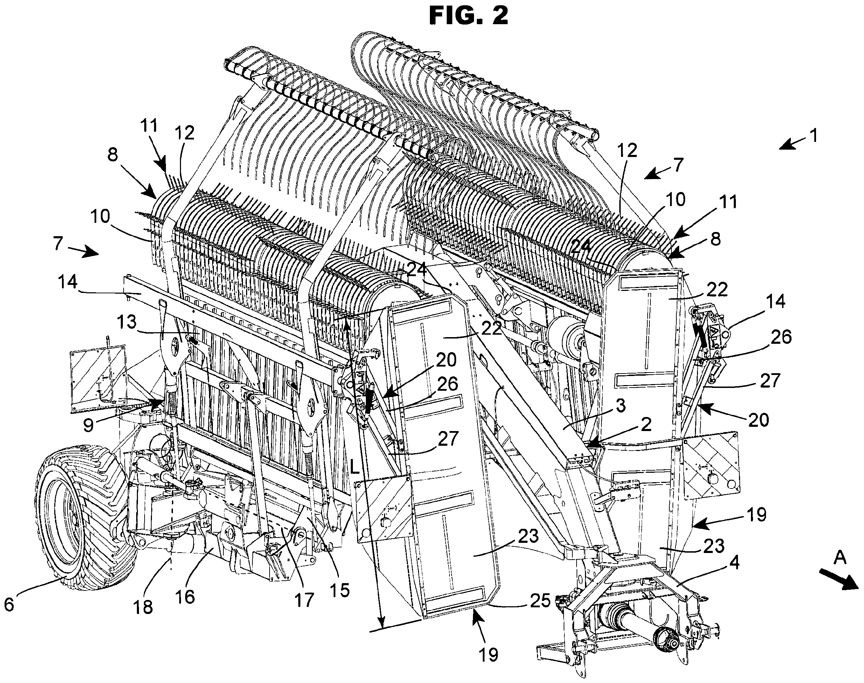

Le bâti (2) de la machine (1) comporte par ailleurs un bras (16) portant l'unité de travail (7). Ce bras (16) est relié à la poutre longitudinale (3) du bâti (2). Le bras (16) est en sus relié au support (15) qui porte l'unité de travail (7). Le bras (16) est articulé de telle sorte qu'il permette à l'unité de travail (7) d'être transposée entre la position de travail et une autre position. Dans la position de travail, l'unité de travail (7) s'étend transversalement à la direction d'avancement (A), notamment sensiblement perpendiculairement. Elle s'étend notamment sensiblement à l'horizontale. L'unité de travail (7) peut être déplacée dans une autre position. Il s'agit notamment d'une position de transport, dans laquelle l'unité de travail (7) est repliée vers le haut. L'unité de travail (7) peut occuper une position relevée utilisée par exemple pour passer au-dessus d'un andain ou lors des manoeuvres. Dans cette position relevée, l'unité de travail (7) est située à quelque distance au-dessus du sol (S). Selon l'exemple de réalisation, le bâti (2) comporte un axe (17) reliant le bras (16) au support (15). Cet axe (17) s'étend transversalement lorsque l'unité de travail (7) est en position de travail, notamment sensiblement parallèlement à l'axe de rotation du rotor (11). L'unité de travail (7) peut être transposée de sa position de travail vers une première orientation sensiblement verticale et transversale, par pivotement vers le haut autour de l'axe (17). L'angle de ce pivotement est par exemple voisin de 90°. Par pivotement ultérieur du bras autour d'un autre axe (18) sensiblement vertical du bâti (2), l'unité de travail (7) est ensuite rabattue contre la poutre longitudinale (3), par exemple vers l'avant. Elle se trouve alors dans une deuxième orientation rapprochée de la verticale et sensiblement dans la direction d'avancement (A), tel que visible à la figure 2. La largeur de la machine (1) est ainsi réduite. Selon l'exemple de réalisation, cette deuxième orientation correspond à la position de transport de l'unité de travail (7), dans laquelle cette dernière s'étend sensiblement à la verticale.

Ainsi qu'il apparaît à la figure 1, la machine (1) selon l'invention peut comporter plusieurs unités de travail (7) en vue d'augmenter sa largeur de travail. La machine (1) selon l'exemple de réalisation comporte deux unités de travail (7) placées l'une à côté de l'autre, de part et d'autre de la poutre longitudinale (3) du bâti (2). Cette machine comporte en sus une unité de travail centrale (7') placée sous la poutre longitudinale (3) du bâti (2). Au travail, les différentes unités de travail (7, 7') peuvent par exemple être alignées de manière à ramasser une bande continue de fourrage au sol (S). Leurs organes de déplacement (9) respectifs sont alors animés dans le même sens de sorte à transférer les végétaux d'un organe de déplacement (9) vers l'organe de déplacement (9) voisin, pour finalement former un andain sur le côté gauche ou bien le côté droit de la machine (1). Il est aussi possible de travailler avec l'unité de travail centrale (7') relevée en vue de former un seul andain central, ou bien un andain central et un andain latéral.

La machine (1) selon l'invention comporte au moins un déflecteur (19) latéral. Celui-ci est relié au bâti (2) au moyen d'un dispositif de liaison (20) qui permet au déflecteur (19) d'occuper une position opérationnelle par rapport à l'unité de travail (7). Dans cette position opérationnelle, le déflecteur (19) se situe à côté de l'unité de travail (7), sensiblement verticalement lorsque ladite unité de travail (7) est considérée sensiblement horizontale. Selon l'exemple de réalisation illustré à la figure 1, un déflecteur (19) est disposé sur le côté gauche de l'unité de travail (7) gauche. Un autre déflecteur (19) est disposé sur le côté droit de l'unité de travail (7) droite, il s'agit de celui représenté plus en détail sur les figures 3 à 5. La suite de la description détaille l'agencement du déflecteur (19) droit et de son dispositif de liaison (20) au bâti (2), il est cependant bien évident qu'elle peut être transposée au déflecteur (19) associé à l'unité de travail (7) gauche. Dans sa position opérationnelle représentée aux figures 1 et 3, le déflecteur (19) s'étend sur une certaine hauteur (dimension verticale) qui est sensiblement égale, ou au moins égale, à la hauteur de l'unité de travail (7) correspondante. Le déflecteur (19) dans sa position opérationnelle présente également une certaine longueur (L) (dimension mesurée suivant la direction d'avancement (A)). Selon l'exemple de réalisation, cette longueur (L) est telle que, suivant la vue de côté de la figure 3, le déflecteur (19) masque au moins en partie l'organe de ramassage (8), il masque de plus totalement l'organe de déplacement (9). Le déflecteur (19) comporte une tôle ou une toile, de préférence sensiblement plane. Cette tôle ou toile est tenue et rigidifiée par une ou plusieurs barrettes métalliques. Le déflecteur (19) comporte notamment une barrette supérieure (21) par laquelle il est relié au dispositif de liaison (20). Le déflecteur (19) ainsi réalisé se présente sous la forme d'un panneau rigide ou déformable d'un seul tenant. Dans sa position opérationnelle, le déflecteur (19) coopère avec l'unité de travail (7) de manière à recevoir un flux de végétaux déplacés latéralement par l'unité de travail (7) pour former un andain. Dans ce but, ainsi qu'il ressort de la figure 3, le déflecteur (19) dans sa position opérationnelle se situe à faible hauteur du sol (S) lorsque l'unité de travail (7) est considérée sensiblement horizontale. De plus, le déflecteur (19) s'étend alors sensiblement parallèlement au sol (S), de sorte que les végétaux déplacés latéralement par l'unité de travail (7) soient arrêtés par le déflecteur (19) et ne passent pas en-dessous de lui. Selon l'exemple de réalisation des figures, ces végétaux sont déplacés transversalement par l'organe de déplacement (9) disposé à l'arrière de l'organe de ramassage (8). Le déflecteur (19) permet la formation d'un andain régulier et bien délimité. Lorsque les végétaux présents au sol (S) sont ramassés par l'unité de travail (7) en un flux irrégulier dû, par exemple, à des variations de densité ou de volume des végétaux fauchés ou fanés présents au sol (S), la présence du déflecteur (19) à côté de l'unité de travail (7) permet à ces végétaux de retomber sur le sol (S) en un andain dont la grande homogénéité facilite sa reprise ultérieure par une presse ou une ensileuse.

Le dispositif de liaison (20) est relié à la structure (14) qui s'étend au-dessus de l'unité de travail (7). Le déflecteur (19) est relié à cette structure (14) du bâti (2) par l'intermédiaire du dispositif de liaison (20). Selon l'invention, le dispositif de liaison (20) est configuré pour que, pendant que la machine se déplace dans une direction (D) et que l'unité de travail (7) est en position de travail, le déflecteur (19) soit autorisé à effectuer au moins un déplacement par rapport à l'unité de travail (7) à partir de la position opérationnelle, longitudinalement dans une direction opposée à ladite direction (D) de déplacement de la machine (1), lorsqu'une résultante d'un effort exercé sur le déflecteur (19) excède un seuil déterminé. Un déplacement du déflecteur (19), depuis la position opérationnelle, peut être effectué dans une direction (D) de déplacement vers l'avant, à savoir la direction d'avancement (A). Cette direction d'avancement (A) est utilisée pour le travail de la machine (1), notamment lorsque l'unité de travail (7) doit ramasser et déplacer latéralement les végétaux présents au sol (S). Cette direction d'avancement (A) peut aussi être utilisée lors des manoeuvres. Un déplacement du déflecteur (19), depuis la position opérationnelle, peut aussi être effectué dans une direction (D) de déplacement vers l'arrière, donc en sens contraire de la direction d'avancement (A), laquelle direction (D) de déplacement vers l'arrière est notamment utilisée pour les manoeuvres. Les manoeuvres sont effectuées par exemple en bout de champ lorsque la machine (1) fait demi-tour et doit être placée précisément pour ramasser une nouvelle bande de végétaux au sol (S). Lorsque la machine (1) se déplace pour le travail de récolte, il se peut que le déflecteur (19) dans sa position opérationnelle entre en collision avec un obstacle tel une pierre présente sur le sol (S), du fait que le déflecteur (19) se situe alors à une faible hauteur au-dessus du sol (S). Il peut aussi heurter un andain relativement dense si le conducteur de la machine (1) omet de relever l'unité de travail (7) à temps. En vue de réduire les contraintes mécaniques subies par le déflecteur (19) et le dispositif de liaison (20) lors d'une telle collision, l'invention prévoit que le déflecteur (19) soit autorisé à se déplacer longitudinalement par rapport à l'unité de travail (7) et ce, dans une direction opposée à la direction (D) de déplacement de la machine (1). Ce déplacement longitudinal du déflecteur (19) en sens contraire de la direction (D) de déplacement de la machine (1) a pour effet de dissiper une partie de l'énergie du choc entre le déflecteur (19) et l'obstacle. Les dommages sur le déflecteur (19) et sur son dispositif de liaison (20) sont ainsi réduits. Selon l'invention, le seuil d'effort, au-delà duquel le déflecteur (19) est autorisé à se déplacer depuis sa position opérationnelle, peut être supérieur à la résultante des efforts normalement induits sur le déflecteur (19) pendant le travail de récolte des végétaux. La résultante des efforts exercés par les végétaux déplacés latéralement par l'unité de travail (7) et venant heurter le déflecteur (19), et des efforts exercés par le frottement du déflecteur (19) avec le sol (S) et/ou avec des végétaux présents au sol (S) sur une faible hauteur, est alors insuffisante pour que le déflecteur (19) puisse se déplacer depuis sa position opérationnelle initiale. Ledit seuil d'effort est en revanche inférieur à la résultante des efforts exercés sur le déflecteur (19) heurtant un obstacle rigide ou un andain dense et/ou de grande hauteur, de telle sorte que le déflecteur (19) puisse alors bouger depuis sa position opérationnelle initiale. Lorsque le déflecteur (19) effectue ledit déplacement depuis la position opérationnelle, il est déplacé vers une autre position en avant ou bien en arrière de ladite position opérationnelle initiale. Dans cette autre position, le déflecteur (19) peut néanmoins continuer à recevoir un flux de végétaux déplacés latéralement par l'unité de travail (7) en vue de former un andain calibré. L'exemple de réalisation comporte cet effet avantageux, car la longueur (L) du déflecteur (19) est suffisamment importante pour qu'au cours de ce déplacement vers l'avant ou vers l'arrière depuis la position opérationnelle initiale, le déflecteur (19) demeure dans la trajectoire des végétaux déplacés latéralement par l'unité de travail (7).

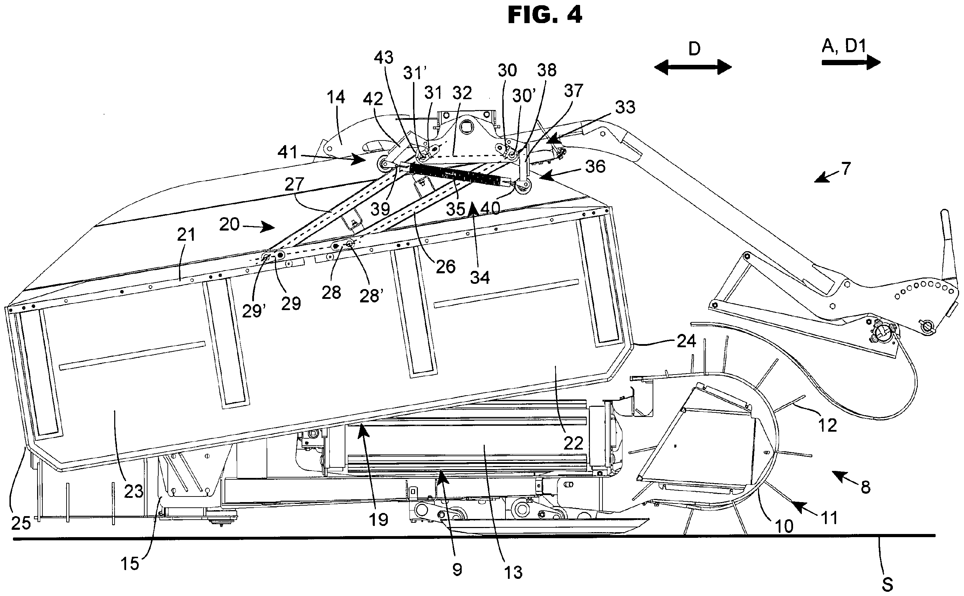

Selon une caractéristique importante de l'invention qui ressort d'un examen de la figure 4, le dispositif de liaison (20) est configuré pour que, pendant que la machine (1) se déplace dans une première direction (D1) dirigée vers l'avant et que l'unité de travail (7) est en position de travail, le déflecteur (19) soit autorisé à effectuer un premier déplacement par rapport à l'unité de travail (7) à partir de sa position opérationnelle, longitudinalement dans une direction opposée à ladite première direction (D1) de déplacement de la machine (1), lorsqu'une résultante d'un effort exercé sur le déflecteur (19) et dirigé vers l'arrière excède un premier seuil déterminé. Le dispositif de liaison (20) selon l'invention autorise ainsi une protection accrue du déflecteur (19) en cas de choc avec un obstacle situé à l'avant du déflecteur (19) et consécutif au déplacement de la machine (1) vers l'avant, tout en garantissant que le déflecteur (19) soit normalement maintenu dans sa position opérationnelle pendant le travail. La première direction (D1) dirigée vers l'avant est en l'occurrence la direction d'avancement (A). Le premier seuil d'effort au-delà duquel le déflecteur (19) est autorisé à se déplacer vers l'arrière depuis sa position opérationnelle, peut être supérieur à la résultante des efforts normalement induits sur le déflecteur (19) pendant le travail de récolte des végétaux. Ainsi, la résultante des efforts exercés par les végétaux déplacés latéralement par l'unité de travail (7) et venant heurter le déflecteur (19), et des efforts exercés par le frottement du déflecteur (19) avec le sol (S) et/ou avec des végétaux présents au sol (S) sur une faible hauteur, est insuffisante pour que le déflecteur (19) puisse se déplacer depuis sa position opérationnelle initiale. Le premier seuil d'effort est en revanche inférieur à la résultante des efforts exercés sur le déflecteur (19) dont l'avant vient heurter un obstacle rigide ou un andain dense et/ou de grande hauteur, de telle sorte que le déflecteur (19) puisse alors bouger vers l'arrière depuis sa position opérationnelle initiale. Lorsque le déflecteur (19) effectue le premier déplacement depuis la position opérationnelle, il est déplacé vers une autre position en arrière de ladite position opérationnelle initiale. Dans cette autre position dont un exemple est donné à la figure 4, le déflecteur (19) peut néanmoins continuer à recevoir un flux de végétaux déplacés latéralement par l'unité de travail (7) en vue de former un andain calibré. L'exemple de réalisation comporte cet effet avantageux, car l'extension longitudinale du déflecteur (19) vers l'avant est suffisamment importante pour que le déflecteur (19) reculé dans ladite autre position demeure dans la trajectoire des végétaux déplacés latéralement par l'unité de travail (7). En effet, le déflecteur (19) présente une partie avant (22) qui, dans la position opérationnelle en vue latérale de la figure 3, masque en grande partie l'organe de ramassage (8), tandis qu'elle se situe longitudinalement au niveau de l'organe de déplacement (9) dans la position reculée du déflecteur (19) illustrée à la figure 4.

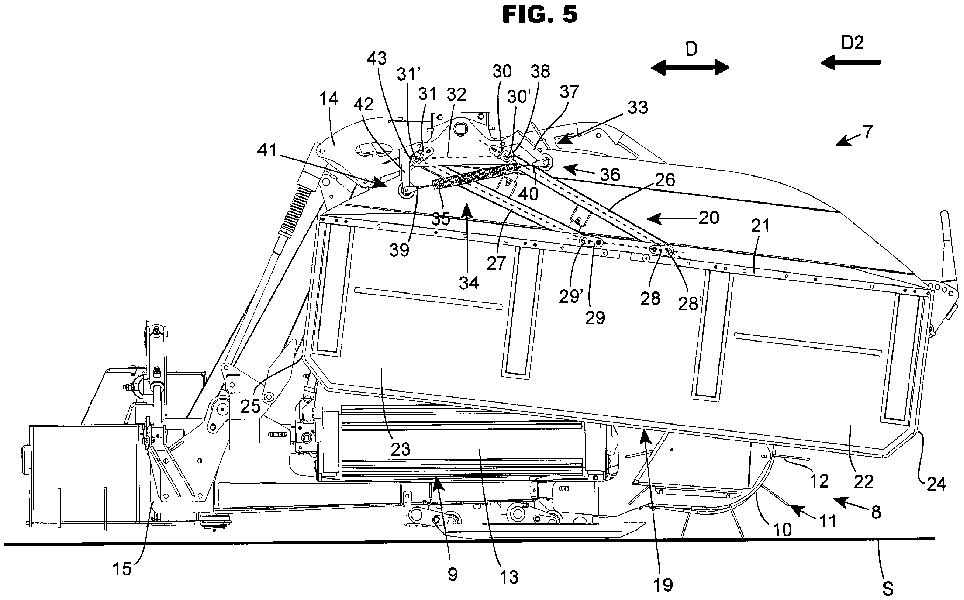

Selon une caractéristique particulièrement avantageuse de l'invention visible à la figure 5, le dispositif de liaison (20) est configuré pour que, pendant que la machine (1) se déplace dans une deuxième direction (D2) dirigée vers l'arrière et que l'unité de travail (7) est en position de travail, le déflecteur (19) soit autorisé à effectuer un deuxième déplacement par rapport à l'unité de travail (7) à partir de sa position opérationnelle, longitudinalement dans une direction opposée à ladite deuxième direction (D2) de déplacement de la machine (1), lorsqu'une résultante d'un effort exercé sur le déflecteur (19) et dirigé vers l'avant excède un deuxième seuil déterminé. Grâce à cette caractéristique, le dispositif de liaison (20) selon l'invention autorise une protection accrue du déflecteur (19) en cas de choc avec un obstacle situé à l'arrière du déflecteur (19) et consécutif au déplacement de la machine (1) vers l'arrière, tout en garantissant que le déflecteur (19) soit normalement maintenu dans sa position opérationnelle pendant le travail. La caractéristique susvisée offre notamment une meilleure protection du déflecteur (19) lors des manoeuvres de la machine (1) en marche arrière. La deuxième direction (D2) dirigée vers l'arrière est en l'occurrence opposée à la direction d'avancement (A). Le deuxième seuil d'effort est inférieur à la résultante des efforts exercés sur le déflecteur (19) venant heurter par l'arrière un obstacle rigide ou un andain dense et/ou de grande hauteur, de telle sorte que le déflecteur (19) puisse alors bouger vers l'avant depuis sa position opérationnelle initiale. Lorsque le déflecteur (19) effectue le deuxième déplacement depuis la position opérationnelle, il est déplacé vers une autre position en avant de ladite position opérationnelle initiale. Dans cette autre position dont un exemple est donné à la figure 5, le déflecteur (19) peut néanmoins continuer à recevoir un flux de végétaux déplacés latéralement par l'unité de travail (7) en vue de former un andain calibré. L'exemple de réalisation comporte cet effet avantageux, car l'extension longitudinale du déflecteur (19) vers l'arrière est suffisamment importante pour que le déflecteur (19) avancé dans ladite autre position demeure dans la trajectoire des végétaux déplacés latéralement par l'unité de travail (7). En effet, le déflecteur (19) présente une partie arrière (23) qui, dans la position opérationnelle en vue latérale de la figure 3, se situe en arrière de l'organe de déplacement (9), tandis qu'elle se situe longitudinalement au niveau de l'organe de déplacement (9) dans la position avancée du déflecteur (19) illustrée à la figure 5.

Selon une caractéristique avantageuse de l'invention, le dispositif de liaison (20) est configuré pour que le au moins un déplacement longitudinal du déflecteur (19) à partir de sa position opérationnelle comporte une composante de translation vers le haut. Ainsi, le déflecteur (19) est relevé du sol (S) en même temps qu'il est déplacé longitudinalement. Le déflecteur (19) peut ainsi passer au-dessus d'un obstacle qu'il rencontre. Les dommages et contraintes mécaniques exercés sur le déflecteur (19) et le dispositif de liaison (20) sont ainsi considérablement réduits. Le au moins un déplacement longitudinal du déflecteur (19) à partir de sa position opérationnelle implique donc un déplacement vers le haut du déflecteur (19). Selon l'exemple de réalisation, ledit déplacement vers le haut a lieu sur la totalité de la longueur (L) du déflecteur (19), c'est-à-dire que l'extrémité avant (24) et l'extrémité arrière (25) du déflecteur (19) se soulèvent au cours dudit déplacement longitudinal. De la sorte, c'est le déflecteur (19) sur toute sa longueur (L) qui peut passer au-dessus d'un obstacle qu'il rencontre. Selon l'exemple de réalisation, lorsque l'unité de travail (7) est dans la position de travail, la distance entre le déflecteur (19) et le sol (S) est minimale lorsque le déflecteur (19) se trouve dans sa position opérationnelle, en revanche elle augmente lorsque le déflecteur (19) se déplace depuis sa position opérationnelle. Selon l'exemple de réalisation illustré à la figure 4, le dispositif de liaison (20) est configuré pour que le premier déplacement longitudinal du déflecteur (19) à partir de sa position opérationnelle comporte une composante de translation vers le haut. Egalement selon cet exemple de réalisation, le dispositif de liaison (20) est configuré pour que le premier déplacement longitudinal du déflecteur (19) à partir de sa position opérationnelle implique un déplacement vers le haut du déflecteur (19) sur toute la longueur (L) de celui-ci, ses extrémités avant et arrière (24 et 25) étant alors toutes deux relevées du sol (S). Selon l'exemple de réalisation par ailleurs illustré à la figure 5, le dispositif de liaison (20) est configuré pour que le deuxième déplacement longitudinal du déflecteur (19) à partir de sa position opérationnelle comporte une composante de translation vers le haut. Egalement selon cet exemple de réalisation, le dispositif de liaison (20) est configuré pour que le deuxième déplacement longitudinal du déflecteur (19) à partir de sa position opérationnelle implique un déplacement vers le haut du déflecteur (19) sur toute la longueur (L) de celui-ci, ses extrémités avant et arrière (24 et 25) étant alors toutes deux relevées du sol (S).

Selon une caractéristique particulièrement avantageuse de l'invention, le dispositif de liaison (20) est configuré pour que le au moins un déplacement longitudinal du déflecteur (19) à partir de sa position opérationnelle comporte une composante de pivotement autour d'un axe orienté transversalement dans la position de travail de l'unité de travail (7). Ledit axe transversal est notamment sensiblement horizontal et sensiblement perpendiculaire à la direction d'avancement (A). Selon l'exemple de réalisation, le dispositif de liaison (20) est configuré pour que le premier déplacement longitudinal du déflecteur (19) à partir de sa position opérationnelle comporte une composante de pivotement autour d'un axe orienté transversalement dans la position de travail de l'unité de travail (7). L'exemple de réalisation prévoit aussi que le dispositif de liaison (20) soit configuré pour que la composante de pivotement du premier déplacement longitudinal ait pour effet de relever l'extrémité avant (24) du déflecteur (19) par rapport au sol (S). Ainsi, lorsque le déflecteur (19) entre en collision avec un obstacle situé à l'avant du déflecteur (19), son extrémité avant (24) peut se soulever du sol (S) en même temps qu'elle recule par rapport à l'unité de travail (7). Le déplacement combiné vers le haut et vers l'arrière de l'extrémité avant (24) du déflecteur (19) contribue à une bonne absorption de l'énergie du choc. Le déflecteur (19) se trouvant ainsi orienté de biais par rapport à l'obstacle, il peut passer plus facilement au-dessus de ce dernier. Selon une autre caractéristique avantageuse que comporte l'exemple de réalisation, le dispositif de liaison (20) est configuré pour que la composante de pivotement du premier déplacement longitudinal ait pour effet de placer l'extrémité avant (24) du déflecteur (19) à plus grande distance du sol (S) que l'extrémité arrière (25) du déflecteur (19). Ainsi, lorsque le déflecteur (19) entre en collision avec un obstacle situé à l'avant du déflecteur (19), il recule par rapport à l'unité de travail (7), son extrémité arrière (25) se soulève et son extrémité avant (24) se soulève davantage que ladite extrémité arrière (25). C'est donc le déflecteur (19) sur toute sa longueur (L) qui, en même temps qu'il recule par rapport à l'unité de travail (7), se soulève du sol (S) et se présente de biais face à l'obstacle situé à l'avant du déflecteur (19). Les dommages causés au déflecteur (19) et au dispositif de liaison (20) sont alors considérablement réduits. Par ailleurs, selon l'exemple de réalisation, le dispositif de liaison (20) est configuré pour que le deuxième déplacement longitudinal du déflecteur (19) à partir de sa position opérationnelle comporte une composante de pivotement autour d'un axe orienté transversalement dans la position de travail de l'unité de travail (7). Cet axe transversal peut notamment être identique à celui autour duquel a lieu la composante de pivotement du premier déplacement longitudinal. L'exemple de réalisation prévoit aussi que le dispositif de liaison (20) soit configuré pour que la composante de pivotement du deuxième déplacement longitudinal ait pour effet de relever l'extrémité arrière (25) du déflecteur (19) par rapport au sol (S). Ainsi, lorsque le déflecteur (19) entre en collision avec un obstacle situé à l'arrière du déflecteur (19), son extrémité arrière (25) peut se soulever du sol (S) en même temps qu'elle avance par rapport à l'unité de travail (7). Le déplacement combiné vers le haut et vers l'avant de l'extrémité arrière (25) du déflecteur (19) contribue à une bonne absorption de l'énergie du choc. Le déflecteur (19) se trouvant ainsi orienté de biais par rapport à l'obstacle, il peut passer plus facilement au-dessus de ce dernier. Selon une autre caractéristique avantageuse que comporte l'exemple de réalisation, le dispositif de liaison (20) est configuré pour que la composante de pivotement du deuxième déplacement longitudinal ait pour effet de placer l'extrémité arrière (25) du déflecteur (19) à plus grande distance du sol (S) que l'extrémité avant (24) du déflecteur (19). Ainsi, lorsque le déflecteur (19) entre en collision avec un obstacle situé à l'arrière du déflecteur (19), il avance par rapport à l'unité de travail (7), son extrémité avant (24) se soulève et son extrémité arrière (25) se soulève davantage que ladite extrémité avant (24). C'est donc le déflecteur (19) sur toute sa longueur (L) qui, en même temps qu'il avance par rapport à l'unité de travail (7), se soulève du sol (S) et se présente de biais face à l'obstacle situé à l'arrière du déflecteur (19). Les dommages causés au déflecteur (19) et au dispositif de liaison (20) sont alors considérablement réduits.

Selon une caractéristique préférentielle de l'invention, le dispositif de liaison (20) est configuré pour qu'en considérant l'unité de travail (7) s'étendant horizontalement, le au moins un déplacement longitudinal du déflecteur (19) à partir de sa position opérationnelle ait lieu au moins essentiellement dans un plan sensiblement vertical et sensiblement parallèle à la direction (D) de déplacement de la machine (1). Ainsi, au cours dudit au moins un déplacement, la position transversale du déflecteur (19) par rapport à l'unité de travail (7) demeure au moins sensiblement constante. La largeur de l'andain formé entre l'unité de travail (7) et le déflecteur (19) n'est donc pas affectée par ledit au moins un déplacement longitudinal. Cette caractéristique combinée à celle selon laquelle le déflecteur (19) demeure dans la trajectoire des végétaux déplacés latéralement par l'unité de travail (7) lorsqu'il effectue ledit au moins un déplacement longitudinal, permet la formation d'un andain bien calibré en toutes circonstances. En sus, le au moins un déplacement longitudinal du déflecteur (19) à partir de sa position opérationnelle n'affecte pas, du moins notablement, la largeur de la machine (1) qui demeure au moins sensiblement constante, ce qui est avantageux si le déflecteur (19) heurte un obstacle alors que la machine (1) longe une bordure située du côté du déflecteur (19). Selon l'exemple de réalisation, le dispositif de liaison (20) est configuré pour que le au moins un déplacement longitudinal du déflecteur (19) depuis sa position opérationnelle ait uniquement lieu dans un plan sensiblement vertical et sensiblement parallèle à la direction de déplacement de la machine (1) (en considérant que l'unité de travail (7) s'étend horizontalement). Dans cet exemple de réalisation, le déplacement longitudinal du déflecteur (19) n'est donc pas combiné à un déplacement transversal par rapport à l'unité de travail (7). Selon l'exemple de réalisation, le dispositif de liaison (20) est configuré pour que le premier déplacement longitudinal du déflecteur (19) à partir de sa position opérationnelle ait lieu au moins essentiellement dans un plan sensiblement vertical et sensiblement parallèle à la direction (D) de déplacement de la machine (1) (en considérant que l'unité de travail (7) s'étend horizontalement). En l'occurrence, ce premier déplacement se fait uniquement dans ledit plan. L'exemple de réalisation prévoit aussi que le dispositif de liaison (20) soit configuré pour que le deuxième déplacement longitudinal du déflecteur (19) à partir de sa position opérationnelle ait lieu au moins essentiellement dans un plan sensiblement vertical et sensiblement parallèle à la direction (D) de déplacement de la machine (1) (en considérant que l'unité de travail (7) s'étend horizontalement). En l'occurrence, ce deuxième déplacement se fait uniquement dans ledit plan. Selon l'exemple de réalisation, en considérant l'unité de travail (7) s'étendant horizontalement, le déplacement longitudinal du déflecteur (19) depuis sa position opérationnelle, à la fois vers l'avant et vers l'arrière par rapport à l'unité de travail (7), se fait dans un même plan sensiblement vertical et sensiblement parallèle à la direction d'avancement (A). La largeur de l'andain formé ainsi que la largeur de la machine (1) demeurent donc constantes quelle que soit la direction de déplacement du déflecteur (19) par suite d'une collision avec un obstacle.

Selon l'exemple de réalisation, le dispositif de liaison (20) comporte deux barres (26 et 27) et chaque barre (26, 27) est reliée au bâti (2) et au déflecteur (19). Cette caractéristique distingue le dispositif de liaison (20) selon l'invention de l'état de la technique connu cité dans l'introduction, dans lequel le déflecteur (19) est relié au bâti (2) au moyen d'une barre de faible section. Cette solution présente l'inconvénient qu'une barre unique peut facilement être tordue et que ses liaisons respectives au bâti et au déflecteur peuvent rapidement prendre du jeu. Par différence, le dispositif de liaison (20) à deux barres (26 et 27) selon l'invention permet au déflecteur (19) d'être fermement maintenu dans sa position opérationnelle et bien guidé lors du au moins un déplacement depuis sa position longitudinale. Selon l'exemple de réalisation, chaque barre (26, 27) se présente sous la forme d'une bielle rigide. Chaque barre (26, 27) est reliée respectivement au bâti (2) et au déflecteur (19) au moyen d'une articulation (28, 29, 30, 31) respective. Selon d'autres réalisations non représentées, une barre (26, 27) peut être déformable, par exemple être constituée par une lame de ressort ou une barre à déformation programmée. Une telle barre (26, 27) déformable peut être reliée au bâti (2) et au déflecteur (19) de manière articulée ou rigide.

L'invention prévoit avantageusement que les deux barres (26 et 27) sont articulées autour d'axes d'articulation (28', 29', 30', 31') qui, en considérant l'unité de travail (7) s'étendant horizontalement, sont sensiblement horizontaux et sensiblement perpendiculaires à la direction (D) de déplacement de la machine (1). Cette caractéristique permet un déplacement longitudinal du déflecteur (19) depuis sa position opérationnelle, à la fois vers l'avant et vers l'arrière par rapport à l'unité de travail (7), dans un même plan sensiblement vertical et sensiblement parallèle à la direction d'avancement (A).

Selon une caractéristique préférée de l'invention que comporte l'exemple de réalisation, dans la position opérationnelle du déflecteur (19), en considérant l'unité de travail (7) s'étendant horizontalement, les projections respectives des deux barres (26 et 27) sur un plan vertical parallèle à la direction (D) de déplacement de la machine (1), présentent chacune une orientation rapprochée de la verticale, et lesdites projections forment un quadrilatère déformable (32). Les côtés du quadrilatère déformable (32) sont constitués par les segments de droite reliant entre eux les points de liaison des deux barres (26 et 27) à la structure (14) du bâti (2), en l'occurrence les axes d'articulation (28' et 29'), (29' et 30'), (30' et 31'), (31' et 28') des deux barres (26 et 27). Les deux barres (26 et 27) sont espacées l'une de l'autre suivant la direction d'avancement (A). Ainsi, lesdites projections forment, dans ledit plan, un quadrilatère déformable (32) qui peut être un rectangle, un parallélogramme ou un trapèze. L'exemple de réalisation montre le dernier cas. La caractéristique préférée mentionnée précédemment permet une cinématique de déplacement du déflecteur (19) sensiblement symétrique de part et d'autre de la position opérationnelle. Autrement dit, la trajectoire de déplacement du déflecteur (19) vers l'arrière depuis sa position opérationnelle est, par rapport à cette dernière, sensiblement le symétrique de la trajectoire de déplacement vers l'avant. Ainsi, la capacité du déflecteur (19) à s'escamoter efficacement vis-à-vis d'un obstacle est sensiblement la même dans les deux directions. En outre, la caractéristique préférée mentionnée précédemment entraîne que la distance du sol (S) au déflecteur (19) est minimale dans sa position opérationnelle lorsque l'unité de travail (7) est dans sa position de travail, et que tout déplacement longitudinal du déflecteur (19) depuis cette position opérationnelle est nécessairement combiné à un déplacement du déflecteur (19) vers le haut. Selon la configuration du quadrilatère déformable (32), ce déplacement longitudinal du déflecteur (19) peut être combiné à un pivotement du déflecteur (19) autour d'un axe transversal.

Selon l'exemple de réalisation, au moins dans la position opérationnelle du déflecteur (19), en considérant l'unité de travail (7) s'étendant horizontalement, le dispositif de liaison (20) s'étend dans un plan sensiblement vertical et sensiblement parallèle à la direction d'avancement (A). Cette caractéristique rend le dispositif de liaison (20) peu encombrant suivant une direction perpendiculaire à la direction d'avancement (A). Ainsi, le dispositif de liaison (20) ne réduit pas la largeur de l'espace disponible entre l'unité de travail (7) et le déflecteur (19), lequel espace est traversé par le flux de végétaux déplacés latéralement par l'unité de travail (7) en direction du déflecteur (19). Pendant le travail, le risque de voir ces végétaux s'enrouler autour du dispositif de liaison (20) est donc réduit. Selon l'exemple de réalisation illustré par les figures, ces avantages sont obtenus par le fait qu'en considérant l'unité de travail (7) s'étendant horizontalement et le déflecteur (19) s'étendant dans sa position opérationnelle, les deux barres (26 et 27) présentent chacune une orientation rapprochée de la verticale.

Selon l'exemple de réalisation, les deux barres (26 et 27) formant quadrilatère déformable (32) reliant le déflecteur (19) au bâti (2), sont agencées de sorte que le quadrilatère déformable (32) présente un centre instantané de rotation (I) situé, dans la position de travail de l'unité de travail (7) et dans la position opérationnelle du déflecteur (19), en-dessous de la surface du sol (S). Le centre instantané de rotation (I) est le point où les deux barres (26 et 27) ou bien les droites passant par leurs points de liaison (28', 30') et (29', 31') se croisent. Dans l'exemple de réalisation, ce centre instantané de rotation (I) est le point de croisement virtuel des prolongements des deux barres (26 et 27), à savoir le point de croisement virtuel des droites passant par les axes d'articulation (28', 30') et (29', 31'). L'avantage de prévoir le centre instantané de rotation (I) en-dessous de la surface du sol (S) lorsque le déflecteur (19) est dans sa position opérationnelle, est qu'un léger déplacement longitudinal du déflecteur (19) de part et d'autre de sa position opérationnelle comporte essentiellement une composante de translation longitudinale, mais en revanche une faible composante de translation verticale. Ainsi, de faibles déplacements longitudinaux du déflecteur (19) en avant ou en arrière depuis sa position opérationnelle initiale, dus pendant le travail à des variations modérées de hauteur ou de densité des végétaux étalés au sol (S), demeurent sensiblement sans effet sur le positionnement vertical du déflecteur (19) par rapport à l'unité de travail (7). Selon l'exemple de réalisation, le centre instantané de rotation (I) du quadrilatère déformable (32) situé en-dessous de la surface du sol (S) lorsque le déflecteur (19) est dans sa position opérationnelle, permet en outre à l'extrémité avant (24) du déflecteur (19) de se soulever du sol (S) lors du premier déplacement vers l'arrière, et à l'extrémité arrière (25) du déflecteur (19) de se soulever du sol (S) lors du deuxième déplacement vers l'avant. Selon l'exemple de réalisation, le centre instantané de rotation (I) du quadrilatère déformable (32) est même situé nettement en-dessous du sol (S) lorsque le déflecteur (19) est dans sa position opérationnelle, d'une distance notamment comprise entre deux et cinquante fois, notamment entre cinq et vingt fois, la hauteur du déflecteur (19). Ceci permet, au cours du premier déplacement longitudinal, que le déflecteur (19) se soulève sur la totalité de sa longueur (L) en même temps que son extrémité avant (24) se soulève davantage que son extrémité arrière (25). De même, au cours du deuxième déplacement longitudinal, le déflecteur (19) se soulève sur la totalité de sa longueur (L) en même temps que son extrémité arrière (25) se soulève davantage que son extrémité avant (24).

Selon une caractéristique avantageuse de l'invention, le dispositif de liaison (20) comporte un dispositif de rappel (33) du déflecteur (19) vers sa position opérationnelle. Ce dispositif de rappel (33) possède au moins deux fonctions. En premier lieu, il maintient le déflecteur (19) dans sa position opérationnelle tant que le déflecteur (19) est soumis aux seuls efforts exercés par les végétaux déplacés latéralement par l'unité de travail (7) et venant heurter le déflecteur (19), et par le frottement du déflecteur (19) avec le sol (S) et/ou avec des végétaux présents au sol (S) sur une faible hauteur. En second lieu, le dispositif de rappel (33) autorise cependant le déflecteur (19) à quitter sa position opérationnelle lorsque les efforts sur le déflecteur (19) sont plus importants, notamment lors d'une collision du déflecteur (19) avec un obstacle rigide ou un andain de grande hauteur et/ou de forte densité. Après que le déflecteur (19) s'est escamoté face à l'obstacle en effectuant le déplacement selon l'invention (premier déplacement vers l'arrière ou bien deuxième déplacement vers l'avant, selon le cas), le dispositif de rappel (33) ramène automatiquement le déflecteur (19) dans sa position opérationnelle initiale. Aux fins d'assurer ces différentes fonctions, le dispositif de rappel (33) peut comporter au moins un moyen d'effort (34), notamment au moins un moyen d'effort élastique (35) tel qu'un ressort, articulé entre le dispositif de liaison (20) et le bâti (2). Le dispositif de rappel (33) comporte en l'occurrence un seul moyen d'effort élastique (35) relié au dispositif de liaison (20) et au bâti (2) de telle sorte que ce moyen d'effort élastique (35) présente une configuration de repos lorsque le déflecteur (19) est dans sa position opérationnelle. Cette configuration de repos est notamment une configuration de tension minimale du moyen d'effort élastique (35). En sus, une même valeur de déplacement longitudinal du déflecteur (19) vers l'avant ou bien vers l'arrière depuis sa position opérationnelle, induit une sollicitation identique du moyen d'effort élastique (35) quittant alors sa configuration de repos.

En l'occurrence, le dispositif de rappel (33) comporte un premier moyen d'effort (36) qui détermine le premier seuil d'effort au-delà duquel le déflecteur (19) est autorisé à effectuer le premier déplacement depuis sa position opérationnelle. Selon l'exemple de réalisation, le premier moyen d'effort (36) comporte un moyen d'effort élastique (35) tel qu'un ressort, articulé directement ou indirectement entre le dispositif de liaison (20) et le bâti (2). Ce moyen d'effort élastique (35) agit entre une première biellette (37), articulée au bâti (2) et placée à l'avant du dispositif de liaison (20), et une barre du dispositif de liaison (20), en l'occurrence celle (27) disposée à l'arrière. Dans la position opérationnelle du déflecteur (19), la première biellette (37) est en appui contre une première butée (38) du bâti (2). Lorsque le déflecteur (19) effectue le premier déplacement vers l'arrière par rapport à l'unité de travail (7), la barre (27) située à l'arrière du dispositif de liaison (20) fait reculer l'extrémité arrière (39) du moyen d'effort élastique (35) dont l'extrémité avant (40) est retenue par la première biellette (37) en appui contre la première butée (38). Le moyen d'effort élastique (35) est alors sollicité à l'allongement, de sorte qu'il présente une tension supérieure à celle dans sa configuration de repos.

Par ailleurs, le dispositif de rappel (33) comporte un deuxième moyen d'effort (41) qui détermine le deuxième seuil d'effort au-delà duquel le déflecteur (19) est autorisé à effectuer le deuxième déplacement depuis sa position opérationnelle. Selon l'exemple de réalisation, le deuxième moyen d'effort (41) comporte un moyen d'effort élastique (35) tel qu'un ressort, articulé directement ou indirectement entre le dispositif de liaison (20) et le bâti (2). Ce moyen d'effort élastique (35) agit entre une deuxième biellette (42), articulée au bâti (2) et placée à l'arrière du dispositif de liaison (20), et une barre du dispositif de liaison (20), en l'occurrence celle (26) disposée à l'avant. Dans la position opérationnelle du déflecteur (19), la deuxième biellette (42) est en appui contre une deuxième butée (43) du bâti (2). Lorsque le déflecteur (19) effectue le deuxième déplacement vers l'avant par rapport à l'unité de travail (7), la barre (26) située à l'avant du dispositif de liaison (20) fait avancer l'extrémité avant (40) du moyen d'effort élastique (35) dont l'extrémité arrière (39) est retenue par la deuxième biellette (42) en appui contre la deuxième butée (43). Le moyen d'effort élastique (35) est alors sollicité à l'allongement.

Tel que représenté sur les figures 3 à 5, le premier moyen d'effort (36) et le deuxième moyen d'effort (41) comportent le même et unique moyen d'effort élastique (35) qui fonctionne tel que cela vient d'être décrit. Ce moyen d'effort élastique (35) relie la première biellette (37) et la deuxième biellette (42) entre elles. La première biellette (37) est placée en avant de la barre avant (26) du dispositif de liaison (20). Cette barre avant (26) est en contact avec la première biellette (37) dans la position opérationnelle du déflecteur (19) et lorsque celui-ci effectue le deuxième déplacement vers l'avant. En revanche, la barre avant (26) s'écarte de la première biellette (37) lors du premier déplacement du déflecteur (19) vers l'arrière. La deuxième biellette (42) est placée en arrière de la barre arrière (27) du dispositif de liaison (20). Cette barre arrière (27) est en contact avec la deuxième biellette (42) dans la position opérationnelle du déflecteur (19) et lorsque celui-ci effectue le premier déplacement vers l'arrière. En revanche, la barre arrière (27) s'écarte de la deuxième biellette (42) lors du deuxième déplacement du déflecteur (19) vers l'avant.

Selon l'exemple de réalisation, l'unité de travail (7) est pivotée autour de l'axe (18) vertical du bâti (2) en vue de sa mise en position de transport, le déflecteur (19) se situe donc dans le prolongement longitudinal de l'unité de travail (7) en position de transport. Comme cette position de transport, illustrée à la figure 2, est également obtenue par pivotement de l'unité de travail (7) autour de l'axe (17) du support (lequel axe (17) étant orienté transversalement dans la position de travail), la longueur (L) du déflecteur (19) présente une orientation rapprochée de la verticale lorsque l'unité de travail (7) se trouve en position de transport. Il en résulte que dans la position de transport, le déflecteur (19) s'inscrit dans l'encombrement transversal de la machine (1) et n'augmente pas ce dernier. Selon l'exemple de réalisation, dans la position de transport, le déflecteur (19) s'étend à l'avant de l'unité de travail (7), sensiblement à la verticale, dans un plan transversal. Selon une caractéristique avantageuse de l'invention, le dispositif de liaison (20) autorise alors le déflecteur (19) à effectuer le au moins un déplacement depuis la position opérationnelle par rapport à l'unité de travail (7), en vue d'abaisser le déflecteur (19) en direction du sol (S). Selon l'exemple de réalisation, le déflecteur (19) placé à l'avant de l'unité de travail (7) en position de transport est rapproché du sol (S) en effectuant le premier déplacement depuis la position opérationnelle dudit déflecteur (19). Ainsi, le dispositif de liaison (20) autorise une réduction de la hauteur totale de la machine (1) au transport et un abaissement de son centre de gravité. Selon l'exemple de réalisation, le déplacement du déflecteur (19) vers le sol (S) à partir de sa position opérationnelle est effectué automatiquement lorsque l'unité de travail (7) est transposée de sa position de travail vers sa position de transport. Ceci est obtenu par le fait que dans la position de transport de l'unité de travail (7), le poids propre du déflecteur (19) est supérieur à l'effort de rappel exercé par le moyen d'effort élastique (35) sur le déflecteur (19), le déflecteur (19) est donc autorisé à effectuer automatiquement le premier déplacement vers le sol (S).

Bien entendu, l'invention n'est pas limitée à l'exemple de réalisation décrit et représenté sur les figures annexées. Des modifications restent possibles dans la limite définie par les revendications.

## Revendications

1. Machine (1) agricole pour la récolte de fourrage, notamment machine (1) de fenaison pour l'andainage de fourrage, comportant un bâti (2) portant au moins une unité de travail (7) pouvant occuper une position de travail dans laquelle l'unité de travail (7) peut ramasser des végétaux couchés sur le sol (S) et les déplacer latéralement, un déflecteur (19) latéral étant relié au bâti (2) au moyen d'un dispositif de liaison (20) permettant au déflecteur (19) d'occuper une position opérationnelle par rapport à l'unité de travail (7), dans laquelle le déflecteur (19) coopère avec l'unité de travail (7) de manière à recevoir un flux de végétaux déplacés latéralement par l'unité de travail (7) pour former un andain, ***caractérisée en ce que*** le dispositif de liaison (20) est configuré pour que, pendant que la machine (1) se déplace dans une direction (D) et que l'unité de travail (7) est en position de travail, le déflecteur (19) soit autorisé à effectuer au moins un déplacement par rapport à l'unité de travail (7) à partir de la position opérationnelle, longitudinalement dans une direction opposée à ladite direction (D) de déplacement de la machine (1), lorsqu'une résultante d'un effort exercé sur le déflecteur (19) excède un seuil déterminé.

2. Machine (1) agricole selon la revendication 1, ***caractérisée en ce que*** le dispositif de liaison (20) est configuré pour que, pendant que la machine (1) se déplace dans une première direction (D1) dirigée vers l'avant et que l'unité de travail (7) est en position de travail, le déflecteur (19) soit autorisé à effectuer un premier déplacement par rapport à l'unité de travail (7) à partir de sa position opérationnelle, longitudinalement dans une direction opposée à ladite première direction (D1) de déplacement de la machine (1), lorsqu'une résultante d'un effort exercé sur le déflecteur (19) et dirigé vers l'arrière excède un premier seuil déterminé.

3. Machine (1) agricole selon la revendication 1 ou 2, ***caractérisée en ce que*** le dispositif de liaison (20) est configuré pour que, pendant que la machine (1) se déplace dans une deuxième direction (D2) dirigée vers l'arrière et que l'unité de travail (7) est en position de travail, le déflecteur (19) soit autorisé à effectuer un deuxième déplacement par rapport à l'unité de travail (7) à partir de sa position opérationnelle, longitudinalement dans une direction opposée à ladite deuxième direction (D2) de déplacement de la machine (1), lorsqu'une résultante d'un effort exercé sur le déflecteur (19) et dirigé vers l'avant excède un deuxième seuil déterminé.

4. Machine (1) agricole selon l'une quelconque des revendications 1 à 3, ***caractérisée en ce que*** le dispositif de liaison (20) est configuré pour que le au moins un déplacement longitudinal du déflecteur (19) à partir de sa position opérationnelle comporte une composante de translation vers le haut.

5. Machine (1) agricole selon l'une quelconque des revendications 1 à 4, ***caractérisée en ce que*** le dispositif de liaison (20) est configuré pour que le au moins un déplacement longitudinal du déflecteur (19) à partir de sa position opérationnelle comporte une composante de pivotement autour d'un axe orienté transversalement dans la position de travail de l'unité de travail (7).

6. Machine (1) agricole selon la revendication 5, ***caractérisée en ce que*** le dispositif de liaison (20) est configuré pour que la composante de pivotement du premier déplacement longitudinal ait pour effet de placer une extrémité avant (24) du déflecteur (19) à plus grande distance du sol (S) qu'une extrémité arrière (25) du déflecteur (19).

7. Machine (1) agricole selon la revendication 5, ***caractérisée en ce que*** le dispositif de liaison (20) est configuré pour que la composante de pivotement du deuxième déplacement longitudinal ait pour effet de placer une extrémité arrière (25) du déflecteur (19) à plus grande distance du sol (S) qu'une extrémité avant (24) du déflecteur (19).

8. Machine (1) agricole selon l'une quelconque des revendications 1 à 7, ***caractérisée en ce que*** le dispositif de liaison (20) est configuré pour qu'en en considérant l'unité de travail (7) s'étendant horizontalement, le au moins un déplacement longitudinal du déflecteur (19) à partir de sa position opérationnelle ait lieu au moins essentiellement dans un plan sensiblement vertical et sensiblement parallèle à la direction (D) de déplacement de la machine (1).

9. Machine (1) agricole selon l'une quelconque des revendications 1 à 8, ***caractérisée en ce que*** le dispositif de liaison (20) comporte deux barres (26 et 27) et chaque barre (26, 27) est reliée au bâti (2) et au déflecteur (19).

10. Machine (1) agricole selon la revendication 9, ***caractérisée en ce que*** les deux barres (26 et 27) sont articulées autour d'axes d'articulation (28', 29', 30', 31') qui, en considérant l'unité de travail (7) s'étendant horizontalement, sont sensiblement horizontaux et sensiblement perpendiculaires à la direction (D) de déplacement de la machine (1).

11. Machine (1) agricole selon la revendication 9 ou 10, ***caractérisée en ce que*** dans la position opérationnelle du déflecteur (19), en considérant l'unité de travail (7) s'étendant horizontalement, les projections respectives des deux barres (26 et 27), sur un plan vertical parallèle à la direction (D) de déplacement de la machine (1), présentent chacune une orientation rapprochée de la verticale, et lesdites projections forment un quadrilatère déformable (32).

12. Machine (1) agricole selon l'une quelconque des revendications 9 à 11, ***caractérisée en ce que*** les deux barres (26 et 27) forment un quadrilatère déformable (32) reliant le déflecteur (19) au bâti (2), lequel quadrilatère déformable (32) présente un centre instantané de rotation (I) situé, dans la position de travail de l'unité de travail (7) et dans la position opérationnelle du déflecteur (19), en-dessous de la surface du sol (S).

13. Machine (1) agricole selon l'une quelconque des revendications 1 à 12, ***caractérisée en ce qu**'au* moins dans la position opérationnelle du déflecteur (19), en considérant l'unité de travail (7) s'étendant horizontalement, le dispositif de liaison (20) s'étend dans un plan sensiblement vertical et sensiblement parallèle à la direction d'avancement (A).

14. Machine (1) agricole selon l'une quelconque des revendications 1 à 13, ***caractérisée en ce que*** le dispositif de liaison (20) comporte un dispositif de rappel (33) du déflecteur (19) vers sa position opérationnelle.

15. Machine (1) agricole selon les revendications 2 et 14, ***caractérisée en ce que*** le dispositif de rappel (33) comporte un premier moyen d'effort (36) qui détermine le premier seuil d'effort au-delà duquel le déflecteur (19) est autorisé à effectuer le premier déplacement.

16. Machine (1) agricole selon les revendications 3 et 14, ***caractérisée en ce que*** le dispositif de rappel (33) comporte un deuxième moyen d'effort (41) qui détermine le deuxième seuil d'effort au-delà duquel le déflecteur (19) est autorisé à effectuer le deuxième déplacement.

17. Machine (1) agricole selon l'une quelconque des revendications 1 à 16, ***caractérisée en ce que*** l'unité de travail (7) peut être transposée dans une position de transport et le dispositif de liaison (20) autorise alors le déflecteur (19) à effectuer le au moins un déplacement depuis sa position opérationnelle par rapport à l'unité de travail (7) en vue d'abaisser le déflecteur (19) en direction du sol (S).

## Patentansprüche

1. Landwirtschaftliche Futtererntemaschine (1), insbesondere Heuwerbungsmaschine (1) zum Futterschwaden mit einem Gestell (2), das mindestens eine Arbeitseinheit (7) trägt, die eine Arbeitsstellung einnehmen kann, in der die Arbeitseinheit (7) auf dem Boden (S) liegende Pflanzen aufsammeln und seitwärts befördern kann, wobei ein seitlicher Ablenker (19) mit dem Gestell (2) mittels einer Verbindungsvorrichtung (20) verbunden ist, die es dem Ablenker (19) ermöglicht, eine Betriebsstellung in Bezug auf die Arbeitseinheit (7) einzunehmen, in der der Ablenker (19) mit der Arbeitseinheit (7) zusammenwirkt, um einen Fluss von Pflanzen aufzunehmen, die von der Arbeitseinheit (7) seitwärts befördert werden, um eine Schwade zu bilden, ***dadurch gekennzeichnet,* dass** die Verbindungsvorrichtung (20) ausgelegt ist, damit es dem Ablenker (19), während sich die Maschine (1) in eine Richtung (D) fortbewegt und sich die Arbeitseinheit (7) in Arbeitsstellung befindet, gestattet ist, mindestens eine Bewegung in Bezug auf die Arbeitseinheit (7) ausgehend von der Betriebsstellung längs in eine Richtung auszuführen, die der Fortbewegungsrichtung (D) der Maschine (1) entgegengesetzt ist, wenn eine Resultante einer auf den Ablenker (19) ausgeübten Kraft einen bestimmten Grenzwert übersteigt.

2. Landwirtschaftliche Maschine (1) nach Anspruch 1, ***dadurch gekennzeichnet,* dass** die Verbindungsvorrichtung (20) ausgelegt ist, damit es dem Ablenker (19), während sich die Maschine (1) in eine erste, nach vorne gerichtete Richtung (D1) fortbewegt und sich die Arbeitseinheit (7) in Arbeitsstellung befindet, gestattet ist, eine erste Bewegung in Bezug auf die Arbeitseinheit (7) ausgehend von seiner Betriebsstellung längs in eine Richtung auszuführen, die der ersten Fortbewegungsrichtung (D1) der Maschine (1) entgegengesetzt ist, wenn eine Resultante einer auf den Ablenker (19) ausgeübten und nach hinten gerichteten Kraft einen ersten bestimmten Grenzwert übersteigt.

3. Landwirtschaftliche Maschine (1) nach Anspruch 1 oder 2, ***dadurch gekennzeichnet,* dass** die Verbindungsvorrichtung (20) ausgelegt ist, damit es dem Ablenker (19), während sich die Maschine (1) in eine zweite, nach hinten gerichtete Richtung (D2) fortbewegt und sich die Arbeitseinheit (7) in Arbeitsstellung befindet, gestattet ist, eine zweite Bewegung in Bezug auf die Arbeitseinheit (7) ausgehend von seiner Betriebsstellung längs in eine Richtung auszuführen, die der zweiten Fortbewegungsrichtung (D2) der Maschine (1) entgegengesetzt ist, wenn eine Resultante einer auf den Ablenker (19) ausgeübten und nach vorne gerichteten Kraft einen zweiten bestimmten Grenzwert übersteigt.

4. Landwirtschaftliche Maschine (1) nach irgendeinem der Ansprüche 1 bis 3, ***dadurch gekennzeichnet,* dass** die Verbindungsvorrichtung (20) ausgelegt ist, damit die mindestens eine Längsbewegung des Ablenkers (19) ausgehend von seiner Betriebsstellung eine Verschiebungskomponente nach oben umfasst.

5. Landwirtschaftliche Maschine (1) nach irgendeinem der Ansprüche 1 bis 4, ***dadurch gekennzeichnet,* dass** die Verbindungsvorrichtung (20) ausgelegt ist, damit die mindestens eine Längsbewegung des Ablenkers (19) ausgehend von seiner Betriebsstellung eine Schwenkkomponente um eine Achse umfasst, die in der Arbeitsstellung der Arbeitseinheit (7) quer verlaufend ausgerichtet ist.

6. Landwirtschaftliche Maschine (1) nach Anspruch 5, ***dadurch gekennzeichnet,* dass** die Verbindungsvorrichtung (20) ausgelegt ist, damit die Schwenkkomponente der ersten Längsbewegung bewirkt, dass ein vorderes Ende (24) des Ablenkers (19) weiter vom Boden (S) beabstandet ist als ein hinteres Ende (25) des Ablenkers (19).

7. Landwirtschaftliche Maschine (1) nach Anspruch 5, ***dadurch gekennzeichnet,* dass** die Verbindungsvorrichtung (20) ausgelegt ist, damit die Schwenkkomponente der zweiten Längsbewegung bewirkt, dass ein hinteres Ende (25) des Ablenkers (19) weiter vom Boden (S) beabstandet ist als ein vorderes Ende (24) des Ablenkers (19).

8. Landwirtschaftliche Maschine (1) nach irgendeinem der Ansprüche 1 bis 7, ***dadurch gekennzeichnet,* dass** die Verbindungsvorrichtung (20) ausgelegt ist, wenn man die Arbeitseinheit (7) als sich horizontal erstreckend betrachtet, damit die mindestens eine Längsbewegung des Ablenkers (19) ausgehend von seiner Betriebsstellung mindestens im Wesentlichen in einer Ebene erfolgt, die im Wesentlichen vertikal und im Wesentlichen parallel zur Fortbewegungsrichtung (D) der Maschine (1) verläuft.

9. Landwirtschaftliche Maschine (1) nach irgendeinem der Ansprüche 1 bis 8, ***dadurch gekennzeichnet,* dass** die Verbindungsvorrichtung (20) zwei Stangen (26 und 27) umfasst und jede Stange (26, 27) mit dem Gestell (2) und dem Ablenker (19) verbunden ist.

10. Landwirtschaftliche Maschine (1) nach Anspruch 9, ***dadurch gekennzeichnet,* dass** die zwei Stangen (26 und 27) um Gelenksachsen (28', 29', 30', 31') angelenkt sind, die, wenn man die Arbeitseinheit (7) als sich horizontal erstreckend betrachtet, im Wesentlichen horizontal und im Wesentlichen senkrecht zur Fortbewegungsrichtung (D) der Maschine (1) verlaufen.

11. Landwirtschaftliche Maschine (1) nach Anspruch 9 oder 10, ***dadurch gekennzeichnet,* dass** in der Betriebsstellung des Ablenkers (19), wenn man die Arbeitseinheit (7) als sich horizontal erstreckend betrachtet, die jeweiligen Vorsprünge der zwei Stangen (26 und 27) auf einer vertikalen, zur Fortbewegungsrichtung (D) der Maschine (1) parallelen Ebene jeweils eine der Vertikalen genäherte Ausrichtung aufweisen, und die Vorsprünge ein verformbares Viereck (32) bilden.

12. Landwirtschaftliche Maschine (1) nach irgendeinem der Ansprüche 9 bis 11, ***dadurch gekennzeichnet,* dass** die zwei Stangen (26 und 27) ein verformbares Viereck (32) bilden, das den Ablenker (19) mit dem Gestell (2) verbindet, wobei das verformbare Viereck (32) einen Momentanpol (I) aufweist, der sich, in der Arbeitsstellung der Arbeitseinheit (7) und in der Betriebsstellung des Ablenkers (19), unter der Oberfläche des Bodens (S) befindet.

13. Landwirtschaftliche Maschine (1) nach irgendeinem der Ansprüche 1 bis 12, ***dadurch gekennzeichnet,* dass** sich zumindest in der Betriebsstellung des Ablenkers (19), wenn man die Arbeitseinheit (7) als sich horizontal erstreckend betrachtet, die Verbindungsvorrichtung (20) in einer im Wesentlichen vertikalen und zur Vorschubrichtung (A) parallelen Ebene erstreckt.

14. Landwirtschaftliche Maschine (1) nach irgendeinem der Ansprüche 1 bis 13, ***dadurch gekennzeichnet,* dass** die Verbindungsvorrichtung (20) eine Rückstellvorrichtung (33) des Ablenkers (19) in seine Betriebsstellung umfasst.

15. Landwirtschaftliche Maschine (1) nach Anspruch 2 und 14, ***dadurch gekennzeichnet,* dass** die Rückstellvorrichtung (33) ein erstes Beanspruchungsmittel (36) umfasst, das den ersten Grenzwert der Kraft bestimmt, über dem es dem Ablenker (19) gestattet ist, die erste Bewegung auszuführen.

16. Landwirtschaftliche Maschine (1) nach Anspruch 3 und 14, ***dadurch gekennzeichnet,* dass** die Rückstellvorrichtung (33) ein zweites Beanspruchungsmittel (41) umfasst, das den zweiten Grenzwert der Kraft bestimmt, über dem es dem Ablenker (19) gestattet ist, die zweite Bewegung auszuführen.

17. Landwirtschaftliche Maschine (1) nach irgendeinem der Ansprüche 1 bis 16, ***dadurch gekennzeichnet,* dass** die Arbeitseinheit (7) in eine Transportstellung gebracht werden kann und die Verbindungsvorrichtung (20) nun dem Ablenker (19) gestattet, die mindestens eine Bewegung aus seiner Betriebsstellung in Bezug auf die Arbeitseinheit (7) auszuführen, um den Ablenker (19) Richtung Boden (S) abzusenken.

## Claims

1. Agricultural machine (1) for forage harvesting, in particular a haymaking machine (1) for forage windrowing, including a frame (2) supporting at least one work unit (7) able to occupy a work position in which the work unit (7) can pick up plants lying on the ground (S) and shift them sideways, a side deflector (19) being connected to the frame (2) by a connecting device (20) allowing the deflector (19) to occupy an operation position relative to the work unit (7), in which the deflector (19) cooperates with the work unit (7) so as to receive a flow of plants shifted sideways by the work unit (7) to form a windrow, ***characterized in* that** the connecting device (20) is designed so that, while the machine (1) moves in a direction (D) and the work unit (7) is in the work position, the deflector (19) is allowed to perform at least a movement relative to the work unit (7) from the operation position, longitudinally in a direction opposite the said movement direction (D) of the machine (1), when a resultant of a force exerted on the deflector (19) exceeds a determined threshold.

2. Agricultural machine (1) according to claim 1, ***characterized in* that** the connecting device (20) is designed so that, while the machine (1) moves in a first direction (D1) oriented forward and the work unit (7) is in the work position, the deflector (19) is allowed to perform a first movement relative to the work unit (7) from its operation position, longitudinally in a direction opposite the said first movement direction (D1) of the machine (1), when a resultant of a force exerted on the deflector (19) and oriented backward exceeds a first determined threshold.

3. Agricultural machine (1) according to claim 1 or 2, ***characterized in* that** the connecting device (20) is designed so that, while the machine (1) moves in a second direction (D2) directed backward and the work unit (7) is in the work position, the deflector (19) is allowed to perform a second movement relative to the work unit (7) from its operation position, longitudinally in a direction opposite the said second movement direction (D2) of the machine (1), when a resultant of a force exerted on the deflector (19) and oriented forward exceeds a second determined threshold.

4. Agricultural machine (1) according to any one of claims 1 to 3, ***characterized in* that** the connecting device (20) is designed so that the at least one longitudinal movement of the deflector (19) from its operation position comprises an upward translational component.

5. Agricultural machine (1) according to any one of claims 1 to 4, ***characterized in* that** the connecting device (20) is designed so that the at least one longitudinal movement of the deflector (19) from its operation position comprises a pivoting component around an axis oriented transversely in the work position of the work unit (7).

6. Agricultural machine (1) according to claim 5, ***characterized in* that** the connecting device (20) is designed so that the pivoting component of the first longitudinal movement results in placing a front end (24) of the deflector (19) at a greater distance from the ground (S) than a rear end (25) of the deflector (19).

7. Agricultural machine (1) according to claim 5, ***characterized in* that** the connecting device (20) is designed so that the pivoting component of the second longitudinal movement results in placing a rear end (25) of the deflector (19) at a greater distance from the ground (S) than a front end (24) of the deflector (19).

8. Agricultural machine (1) according to any one of claims 1 to 7, ***characterized in* that** the connecting device (20) is designed so that when considering the work unit (7) extending horizontally, the at least one longitudinal movement of the deflector (19) from its operation position takes place at least essentially in a substantially vertical and substantially parallel plane to the movement direction (D) of the machine (1).

9. Agricultural machine (1) according to any one of claims 1 to 8, ***characterized in* that** the connecting device (20) comprises two bars (26 and 27), and each bar (26, 27) is connected to the frame (2) and the deflector (19).

10. Agricultural machine (1) according to claim 9, ***characterized in* that** the two bars (26 and 27) are articulated around articulation axes (28', 29', 30', 31') which, when considering the work unit (7) extending horizontally, are substantially horizontal and substantially perpendicular to the movement direction (D) of the machine (1).

11. Agricultural machine (1) according to claim 9 or 10, ***characterized in* that** in the operation position of the deflector (19), when considering the work unit (7) extending horizontally, the respective projections of the two bars (26 and 27) in a vertical plane parallel to the movement direction (D) of the machine (1) each have an orientation close to the vertical, and the said projections form a deformable quadrilateral (32).

12. Agricultural machine (1) according to any one of claims 9 to 11, ***characterized in* that** the two bars (26 and 27) form a deformable quadrilateral (32) connecting the deflector (19) to the frame (2), which deformable quadrilateral (32) has an instantaneous rotation center (I) situated, in the work position of the work unit (7) and in the operation position of the deflector (19), below the surface of the ground (S).

13. Agricultural machine according to any one of claims 1 to 12, ***characterized in* that** at least in the operation position of the deflector (19), when considering the work unit (7) extending horizontally, the connecting device (20) extends in a substantially vertical and substantially parallel plane to the direction of advance (A).

14. Agricultural machine (1) according to any one of claims 1 to 13, ***characterized in* that** the connecting device (20) includes a resetting device (33) for resetting the deflector (19) in its operation position.

15. Agricultural machine (1) according to claims 2 and 14, ***characterized in* that** the resetting device (33) comprises a first force mean (36) that determines the first force threshold beyond which the deflector (19) is allowed to perform the first movement.

16. Agricultural machine (1) according to claims 3 and 14, ***characterized in* that** the resetting device (33) includes a second force mean (41) that determines the second force threshold beyond which the deflector (19) is allowed to perform the second movement.

17. Agricultural machine (1) according to any one of claims 1 to 16, ***characterized in* that** the work unit (7) can be transposed into a transport position and the connecting device (20) allows the deflector (19) to perform the at least one movement from its operation position relative to the work unit (7), in order to lower the deflector (19) toward the ground (S).
